# EUROPEAN PATENT APPLICATION

(11) **EP 1 219 154 A1**
(43) Date of publication of application: **03.07.2002**
(21) Application number: 01204616.5
(22) Date of filing: 29.11.2001
(51) Int. Cl.: A01C 15/00

(54) **A device for spreading granular and /or pulverulent material**

(30) Priority: 21.12.2000 NL 1016944
(71) Applicant: Lely Enterprises AG, 6300 ZUG (CH)
(72) Inventor: van der Lely, Olaf, 6300 Zug (CH)
(74) Representative: Corten, Maurice Jean F.M.

(57) **Abstract**

A device for spreading granular and/or pulverulent material, in particular for spreading fertilizer. The device is provided with a hopper (1) with at least one discharge opening (4,5). There is provided at least one drivable spreading member (8,9) for spreading the material. A drivable agitator member (11,12) influences the conveyance of the material to be spread through the discharge opening (4,5). The agitator member (11,12) is drivable independently of the spreading member (8,9).

## Description

The present invention -relates to a device for spreading granular and/or pulverulent material, in particular for spreading fertilizer, which device comprises a hopper provided with at least one discharge opening, at least one drivable spreading member, and a drivable agitator member for influencing the conveyance of the material to be spread through the discharge opening.

Such a device is known from European patent application EP-A-0 481 845. In this document the drive of the agitator member is coupled with the drive of the spreading member. This has the disadvantage that at usually high rotational speeds of the spreading member, the mentioned means smash and even pulverize the material to be spread, at least when it is granular. Moreover, in the case that the discharge opening is completely closed, an immediate stop of the agitator member is not achieved.

It is an object of the invention to solve these problems at least partially.

To that end a device of the above-mentioned type according to the invention is characterized in that the agitator member is drivable independently of the spreading member. The invention is based on the insight that at least part of the problems of the known device are caused by the fact that there is a coupling between the drive of the spreading member and the drive of the agitator member. By making, according to the invention, the drive of the agitator member independent, the agitator member can be controlled quickly and in a desired manner. Thus, according to the invention, it is moreover possible to set the agitator member in motion, even with a stationary spreading member. Due to this, bridging before or after the use of the device can be prevented, so that immediately after opening of the discharge opening, the material properly flows through. Besides, in the situation of a driven spreading member, it is possible to deactivate the drive of the agitator member, for example when this appears not to be necessary. This results in a considerably lower energy consumption and in a uniform outflow behaviour of the material, because the stationary agitator member cannot exercise a disturbing influence.

In a preferred embodiment of a device according to the invention, the discharge opening is adapted to be closed at least partially by a drivable closing member, and the agitator member is drivable independently of the closing member. This in contrast with the known device in which the drive of the closing member and that of the agitator member are coupled. Thus it is possible according to the invention to set the agitator member in motion even in the situation of a closed discharge opening. Due to this it is achieved that, immediately after opening of the discharge opening, the material properly flows through, because the agitator member has for example removed bridging. Besides, in the situation of an open discharge opening, it is possible to activate or deactivate the drive of the agitator member according to one's wishes.

The device according to the invention preferably comprises a drivable metering member for supplying the material to be spread in a way in which it is metered to the discharge opening, the agitator member being drivable independently of the metering member. Such a metering member may be constituted e.g. by an auger or similar.

Preferably, at least one of the drivable members, in particular all the drivable members present, are controlled from a cabin of a vehicle by which the device is moved forward. In this manner the driver of the device has the possibility to control the relevant members according to his wishes and if required. For reasons of accuracy and speed of operation it is advantageous when the drive of the agitator member is electronically controllable.

Alternatively or additionally, the drive of the agitator member may be realized automatically, by controlling sensor members, so that the driver only has to perform few, if any actions for operating the device. In particular for reasons of safety, the device is preferably provided with the two options, i.e. manual and automatic, for operating the drive of the agitator member.

In an embodiment of a device according to the invention, there is provided a sensor member for detecting a flow of material through the discharge opening, and for issuing, in dependence of a detected flow of material, a control signal for the drive of the agitator member. Said sensor member may comprise e.g. an optical sensor with detector disposed near the discharge opening of the hopper. By means of said sensor member it is possible to detect whether or not there is a flow of material. Thus it is possible, in case of an opened discharge opening, only to drive the agitator member at the moment when there is not detected a flow of material.

A more accurate function in dependence of the desired amount of material to be spread per unit of time can be obtained when the device is provided with a sensor member for detecting the amount of material flowing through the discharge opening per unit of time and for issuing, in dependence of a detected flow of material per unit of time, a control signal for the drive of the agitator member. An alternative or additional control of the agitator member can be obtained when the device is provided with a sensor member for detecting the decrease in weight per unit of time of the hopper with material, and for issuing, in dependence of a detected decrease in weight per unit of time, a control signal for the drive of the agitator member. Such a sensor member may be constituted by a weighing trestle by means of which the device can be coupled to a vehicle by which it is moved forward. Such a weighing trestle is described in EP-A-0 537 857.

An advantageous control of the drive of the agitator member is provided by a sensor member for detecting the level of the material in the hopper and for issuing, in dependence of a detected level, a control signal for the drive of the agitator member. An accurate control can be obtained when the device is provided with a sensor member for detecting the decrease per unit of time of the level of the material in the hopper, and for issuing, in dependence of a detected decrease of the level per unit of time, a control signal for the drive of the agitator member.

It will be obvious that a variety of sensors may be present at the same time, which is recommendable for reasons of accuracy. For the purpose of preventing conflicts in the control, there may be provided a computer programme giving the data from certain sensors priority to data from other sensors, or making use of a decision criterion to be programmed according to one's wishes.

When a two-disc-spreader is used, on the so-called "edge spreading", one of the discharge spouts of the hopper will be closed; such a method is known from EP-A-0 551 949. In order to apply the inventive idea of the present application to such a device, the latter is characterized in that the hopper is provided with at least two discharge spouts, each discharge spout comprising at least one discharge opening, and in that in each discharge spout there is provided an agitator member for influencing the conveyance of the material to be spread through a respective discharge opening, said agitator members in the various discharge spouts being drivable independently of each other.

The invention also relates to a device for spreading granular and/or pulverulent material, in particular for spreading fertilizer, which device comprises a hopper provided with at least one discharge opening, the discharge opening being at least partially adapted to be closed by means of a drivable closing member, at least one drivable spreading member, and a drivable agitator member for influencing the conveyance of the material to be spread through the discharge opening, the agitator member being drivable independently of the closing member.

The invention also relates to a device for spreading granular and/or pulverulent material, in particular for spreading fertilizer, which device comprises a hopper provided with at least one discharge opening, at least one drivable spreading member, a drivable agitator member for influencing the conveyance of the material to be spread through the discharge opening, and a drivable metering member for supplying the material to be spread in a way in which it is metered to the discharge opening, the agitator member being drivable independently of the metering member.

On the one hand, in order to prevent unwanted pulverization of the material, it is desirable that the agitator member is not active too long, while, on the other hand, the agitator member has to be operative sufficiently long for allowing an operation of the device according to parameters set. In an embodiment of a device according to the invention this can be realized automatically when a control signal brings about an activation of the agitator member during a previously adjustable first period of time. In this manner the agitator member only needs to be active when the control signal detects an operation that deviates from parameters set. Consequently, the agitator member is only activated when necessary.

Preferably, there is provided a checking means, comprising a computer or a microprocessor, for checking at least after driving the agitator member during the first period of time whether the device functions according to parameters set. In this manner it is possible to check whether the activation of the agitator member has had the desired result. If this is not the case, the agitator member may be activated again, or an alarm signal may be issued. This alarm signal may be a signal that is perceptible to the driver, but alternatively or additionally it may stop automatically the drive of the relevant drivable members. Besides, the alarm signal may stop the drive of the vehicle.

The invention will now be explained in further detail by way of example with reference to some embodiments shown in the drawing, in which:
Figure 1 is a schematic side view of a device for spreading fertilizer according to the invention, said device being attached to a pulling vehicle;
Figure 2 shows a device designed as a two-disc-spreader with an agitator control according to the invention;
Figure 3 shows a part of the device shown in Figure 2 with an agitator control;
Figure 4 shows an alternative embodiment of a device according to the invention;
Figure 5 shows a further alternative embodiment of a device according to the invention;
Figure 6 shows another alternative embodiment of a device according to the invention;
Figure 7 shows again another alternative embodiment of a device according to the invention,
and Figure 8 shows schematically an embodiment of a device for spreading fertilizer according to the invention, having an auger as a metering member.

The invention will be explained in further detail with reference to a fertilizer spreader as a device for spreading granular and/or pulverulent material. However, it will be obvious that the invention can also be applied to a device for spreading other granular and/or pulverulent material, such as salt for icy roads, sand, pesticides, herbicides and the like. Further it will be obvious that the invention is not limited to the embodiments shown in the figures, but that within the scope of the claims other embodiments are possible as well.

The invention will be described hereinafter with reference to blades disposed on a spreading disc. However, it will be obvious that also self-supporting blades or blades mounted in another manner constitute part of the invention.

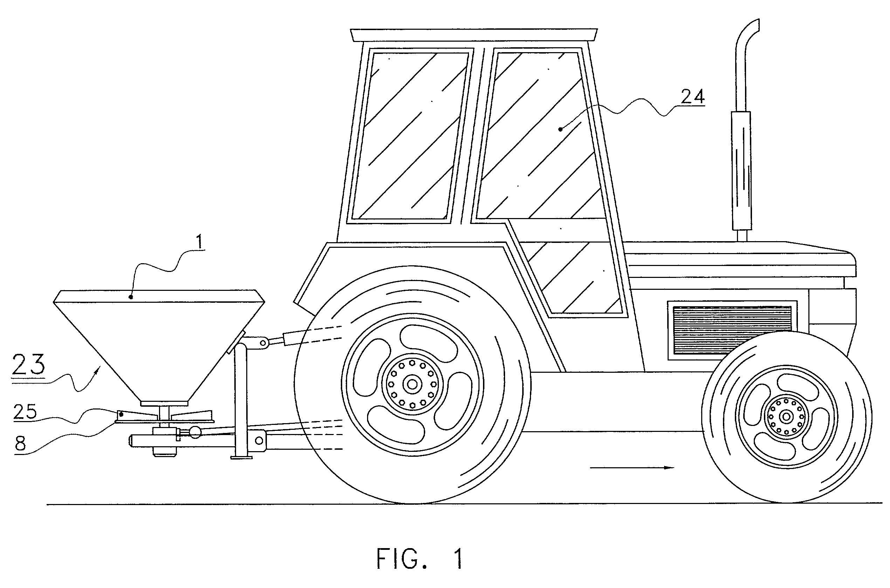

Figure 1 shows schematically a perspective view of a fertilizer spreader 23, which is carried by a pulling vehicle 24, such as a tractor. The fertilizer spreader 23 comprises a hopper 1 for fertilizer. Centrally below the hopper 1 there is disposed a spreading member 8, such as a spreading disc, carrying at least one blade 25. During rotation of the spreading member 8, as a result of which the blade 25 will rotate as well, fertilizer coming from the hopper 1 will be spread by the blade 25. The degree of spreading, also called the working range, depends inter alia on the weight and the granule size of the fertilizer, the rotation speed of the spreading disc, the length of the blade, the angular position of the blade on the spreading disc, the place where the fertilizer hits the blade, and the height adjustment of the end of the blade relative to the spreading disc.

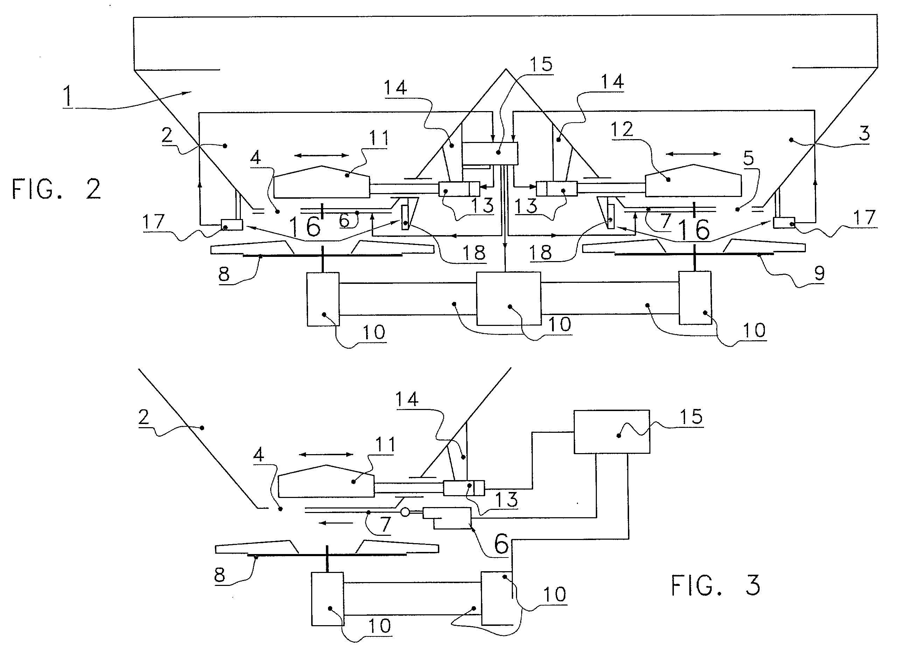

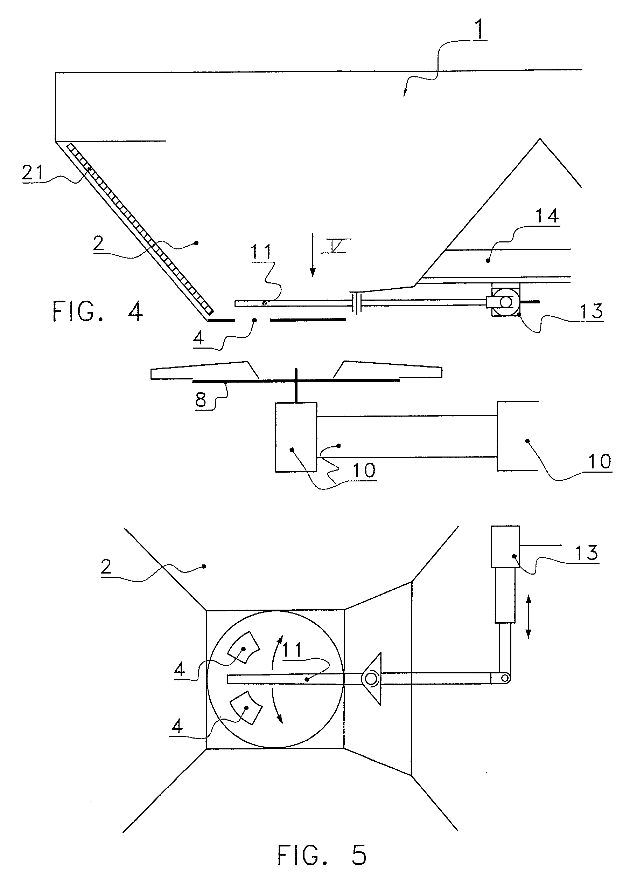

Figure 2 shows a device designed as a two-disc-spreader according to the invention. The hopper 1 of this two-disc-spreader comprises two discharge spouts 2 and 3, each being provided at their bottom side with one or more discharge openings 4, respectively 5. These discharge openings are adapted to be closed completely or partially to a greater or lesser extent by means of of a drivable closing member 6. This closing member is only schematically shown in Figure 2 and more in detail in Figure 3. This closing member 6 comprises a closing means 7. Below each of the discharge openings 4 and 5 there is disposed a drivable spreading member 8, respectively 9. These spreading members 8, 9 are for example drivable from the power take-off shaft of the vehicle 24. By means of an intermediate axis the power take-off shaft is connected with a transmission system 10 for the spreading members 8, 9. The material let through via the discharge openings 4, respectively 5 lands on the spreading members 8 and 9, in particular on the blades thereof, and is flung away by the rotating movement of said blades.

It appears that, during flowing out of the material to be spread through the discharge openings 4, respectively 5, irregularities and clogging frequently occur in practice. For this reason it is customary to dispose a stirring member or another movable, drivable agitator member in the hopper 1.

In the present embodiment there is disposed an agitator 11, respectively 12 in the two discharge spouts 2 and 3. Each agitator 11, 12 influences the conveyance of the material to be spread through the associated discharge opening. By moving said agitator members 11, 12 in the lower part of the discharge spouts 2 and 3, irregularities and/or clogging are prevented from occurring in the lower part of the hopper. When the material to be spread is constituted by granular material, such as fertilizer granules, it is important that these granules are not smashed or pulverized by the relevant agitator member 11, 12. Besides, the agitator member 11, 12 has to be active sufficiently long for enabling a correct operation of the device.

According to the invention this is realized in that the agitator member 11, 12 is drivable independently of the spreading member 8, 9. As a result of this the agitator member 11, 12 can be controlled quickly and according to one's wishes. Thus it is possible to set the agitator member 11, 12 in motion, even in the situation of a stationary spreading member 8, 9. Due to this, it is prevented that before or after the use of the device bridging occurs in the material, so that immediately after opening of the discharge opening 4, 5, the material properly flows through. Besides, it is possible, in the situation of a driven spreading member 8, 9, to deactivate the drive of the agitator member 11, 12 when this drive would not be required at certain points of time.

The discharge opening 4, 5 is adapted to be closed at least partially by a drivable closing member 6, as shown in Figure 3. The drive of the agitator member 11, 12 is independent of the drive of the closing member 6, which is already advantageous per se. Thus it is possible to set the agitator member 11, 12 in motion, even in the situation of a closed discharge opening 4, 5. Besides, it is possible to activate or deactivate the drive of the agitator member 11, 12, according to one's wishes. Thus, the drive of the agitator member is independent both of the drive of the spreading member and of the drive of the closing member.

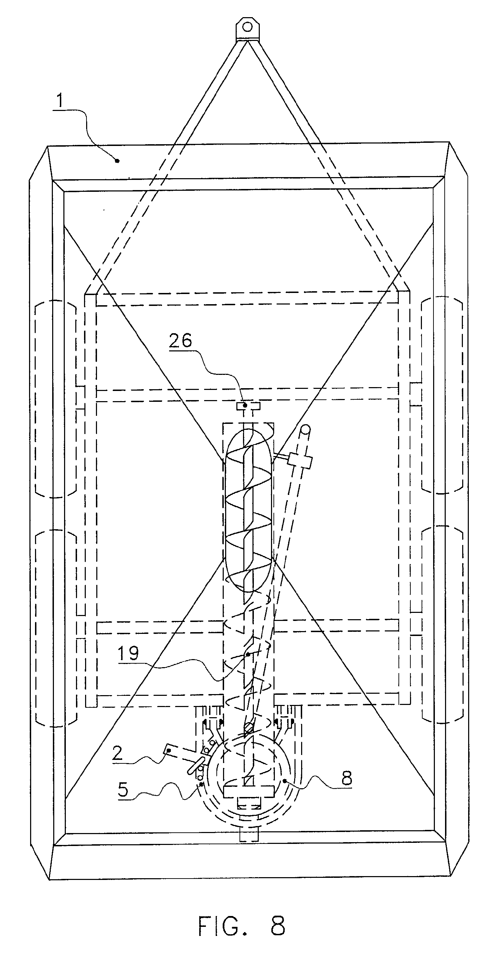

Figure 8 is a schematic plan view of a fertilizer spreader in which the spreading member 8 is not disposed centrally below the hopper 1. For the purpose of conveying the fertilizer from the hopper 1 to the spreading member 8, in particular the blade 25, there is provided a metering member 19, e.g. constituted by an auger. The auger 19 is driven by a motor 26 that rotates the auger 19 independently of the agitator member (for the sake of clearness non-shown in the drawing), which is already advantageous per se.

The metering member 19 can be adjusted at different angles relative to the horizontal plane (the bottom plane of the hopper 1). The metering member 19 can further be adjusted at a positive angle, a negative angle and at an angle of zero degrees relative to the horizontal plane. Moreover, such a metering member can also extend at least partially in the hopper. The metering member 19 is preferably drivable independently of the spreading member 8.

Preferably, at least one of the drivable members, in particular all drivable members present, is controlled from a cabin of the vehicle 24. For reasons of accuracy and speed it is advantageous when the drive of the agitator member 11, 12 is electronically controllable.

For that purpose an electronically controlled motor, control cylinder or actuator may be used. In Figures 2 through 5 the agitator members are moved by an actuator 13. In the embodiment of Figures 2 and 3 there is brought about a reciprocating movement of the agitator members 11, 12 by means of the actuator 13. The drive of these agitator members 11, 12 takes place in these embodiments through the lateral side of the discharge spouts 2, 3. Of course, a fitting closing of the opening in the discharge spouts 2, 3 around the drive rod for the agitator members 11, 12 has to be ensured. Both activation and deactivation of the actuator 13 and the speed of movement thereof may be controlled electronically from a microprocessor 15. As shown in Figure 2, said microprocessor 15 may be disposed in the space between the two discharge spouts 2 and 3. Of course, it is also possible for said microprocessor 15 to be integrated into a computer that is disposed in the pulling vehicle 24. The information needed by the microprocessor 15 for being able to control the actuator 13, may come from the driver of the device as well as from sensor members as described hereinafter.

In Figure 2 there is used a sensor member 16 containing an optical element 17 that co-operates with a reflecting element 18. Such a sensor member 16 is fastened to the lower side of each of the discharge spouts 2 and 3 and is arranged in such a manner that by means thereof it can be detected whether or not material flows from the discharge openings 4, respectively 5. The sensor member 16 may even be designed in such a manner that it is possible to establish what is the outflow density, i.e. the amount of material per unit of time, and whether there are variations in this outflow density. Of course, for this purpose also other sensor members known per se may be used.

When a one-disc-spreader is used, as shown in Figure 8 for example, it will occur, in particular on the headland, that the discharge opening has to be closed completely. Then the agitator member has to be stopped at the same time. In this situation a quick control of the actuator is of major importance.

At the so-called "edge spreading" by means of a two-disc-spreader it may be desirable to close the discharge opening or discharge openings of one of the discharge spouts completely, so that spreading only takes place via the spreading member below the other discharge spout, by means of which it is possible to spread over half the spreading width. Also at "edge spreading" the agitator member in one of the discharge spouts has to be stopped as soon as the discharge openings in the relevant discharge spout are closed. Therefore, when such a two-disc-spreader is used, the agitator members in the separate discharge spouts have to be active independently of each other. Consequently, there has to be provided an actuator control for the two agitator members individually.

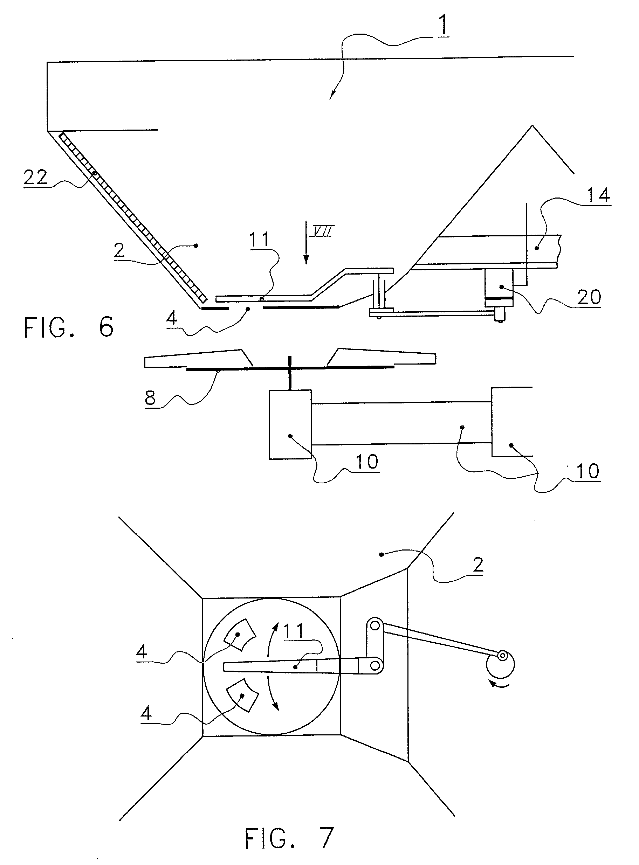

The agitator members 11 and 12 may differ in the way in which they are designed and in the way in which they are driven. In Figures 2 and 3 the actuator 13 brings about a reciprocating movement of the agitator in the lower part of the relevant discharge spouts. In Figures 4 and 5 the actuator 13 brings about a swivelling movement above the two discharge openings in the lower part of a relevant discharge spout. Figures 6 and 7 show swivelling agitator members which are equal to those in Figures 4 and 5, but which are motor-driven via a rod mechanism. It will be obvious that also other types of agitator members may be used, e.g. agitator members rotating about a vertical axis and adapted to be driven by a motor disposed in the lower part of the hopper. In a (non-shown) embodiment a discharge spout may be designed conically and be provided in the lateral side of its lower part with discharge openings. The agitator members may then be formed by designing the bottom plate of the discharge spout so as to be rotatable.

Apart from the fact that there may be applied different agitator members, there may be used different sensor members supplying the relevant data by means of which the drive means for the agitator may be controlled. As already mentioned, an optical sensor may be disposed below a discharge spout, as shown in Figure 2.

Such sensor members may control automatically the drive of the agitator member, so that the driver has only to perform few, if any actions for operating the device. In particular for reasons of safety, the device is preferably provided with the two options, i.e. manual and automatic, for the operation of the drive of the agitator member.

As described above, the sensor member 16, 17, 18 may be adapted to detect the amount of material flowing through the discharge opening 4, 5 per unit of time and for issuing, in dependence of a detected flow of material per unit of time, a control signal, preferably to the microprocessor 15 or a similar computer, for the drive of the agitator member 11, 12.

A further sensor member that may be used is a sensor member 21 (Figure 4) for detecting the level of the material in the hopper 1. Said sensor member 21 issues, in dependence of a detected level, a control signal for the drive of the agitator member 11, 12 to e.g. the microprocessor 15. An accurate control can be obtained when the device is provided with a sensor member 22 (Figure 5) for detecting the decrease of the level per unit of time of the material in the hopper 1, and for issuing, in dependence of a detected decrease of the level per unit of time, a control signal for the drive of the agitator member 11, 12. Such a sensor member 22 may be constituted by a series of juxtaposed detector elements. Such detector elements are known per se.

Another possibility is to make use of a weighing sensor 20 (Figure 6) or weighing trestle. Such a weighing trestle 20 is used for carrying the spreader in the lifting hitch at the back of the vehicle 24, while by means of load cells or the like the decrease in weight during spreading can be detected and at the same time irregularities or clogging during spreading of material.

It will be obvious that a variety of sensors may be present at the same time, which is recommendable for reasons of accuracy. For the purpose of preventing conflicts in the control, there may be provided a computer programme stored in the microprocessor 15 and giving the data from certain sensors priority to data from other sensors, or making use of a decision criterion to be programmed according to one's wishes.

Thus the microprocessor 15 constitutes a checking means which is suitable for controlling the drive of the agitator member with the aid of the data from the sensors. The control is preferably such that a control signal from the microprocessor 15 brings about an activation of the agitator member 11, 12 during a previously adjustable first period of time. The period of time may be determined by 'trial' and 'error', and may depend inter alia on the type of fertilizer, the size of the hopper, etc.

By means of the sensors the microprocessor 15 is adapted to check whether the activation of the agitator member 11, 12 during the first period of time has had a sufficient effect, and whether the device functions according to parameters set. When this is not the case, there may be started again a temporary activation during a second period of time which may for example be longer than the first one. When neither of these measures is effective, the microprocessor 15 may issue an alarm signal. This alarm signal can draw the driver's attention to the fact that something is wrong, but can stop automatically at the same time the drive of relevant drivable members, among which the pulling vehicle. If desired, the alarm signal can already be issued after the first temporary drive, in case the first drive has not been effective.

## Claims

1. A device for spreading granular and/or pulverulent material, in particular for spreading fertilizer, which device comprises:
a hopper (1) provided with at least one discharge opening (4, 5),
at least one drivable spreading member (8, 9), and
a drivable agitator member (11, 12) for influencing the conveyance of the material to be spread through the discharge opening (4, 5), **characterized in that** the agitator member (11, 12) is drivable independently of the spreading member (8, 9).

2. A device as claimed in claim 1, **characterized in that** the discharge opening (4, 5) is adapted to be closed at least partially by a drivable closing member (6, 7), and **in that** the agitator member (11, 12) is drivable independently of the closing member (6, 7).

3. A device as claimed in claim 1 or 2, **characterized in that** the device comprises a drivable metering member (19) for supplying the material to be spread in a way in which it is metered to the discharge opening (4, 5), and **in that** the agitator member (11, 12) is drivable independently of the metering member (19).

4. A device for spreading granular and/or pulverulent material, in particular for spreading fertilizer, which device comprises:
a hopper (1) provided with at least one discharge opening (4, 5), the discharge opening (4, 5) being adapted to be closed at least partially by a drivable closing member (6, 7),
at least one drivable spreading member (8, 9), and
a drivable agitator member (11, 12) for influencing the conveyance of the material to be spread through the discharge opening (4, 5), the agitator member (11, 12) being drivable independently of the closing member (6, 7).

5. A device for spreading granular and/or pulverulent material, in particular for spreading fertilizer, which device comprises:
a hopper (1) provided with at least one discharge opening (4, 5),
at least one drivable spreading member (8, 9),
a drivable agitator member (11, 12) for influencing the conveyance of the material to be spread through the discharge opening (4, 5), and
a drivable metering member (19) for supplying the material to be spread in a way in which it is metered to the discharge opening (4, 5), the agitator member (11, 12) being drivable independently of the metering member (19).

6. A device as claimed in any one of the preceding claims, **characterized in that** at least one of the drivable members (6, 7; 8, 9; 11, 12; 19) is controllable from a cabin of a vehicle by which the device is moved forward.

7. A device as claimed in any one of the preceding claims, **characterized in that** the device is provided with a sensor member (16, 17, 18) for detecting a flow of material through the discharge opening (4, 5), and for issuing, in dependence of a detected flow of material, a control signal for the drive of the agitator member (11, 12).

8. A device as claimed in claims 6 and 7, **characterized in that** at least one of the drivable members (6, 7; 8, 9; 11, 12; 19) is manually controllable from a cabin of a vehicle by which the device is moved forward, and **in that** the device is provided with a sensor member (16, 17, 18) for detecting a flow of material through the discharge opening (4, 5), and for issuing, in dependence of a detected flow of material, a control signal for the drive of the agitator member (11, 12).

9. A device as claimed in any one of the preceding claims, **characterized in that** the drive of the agitator member (11, 12) is electronically controllable.

10. A device as claimed in any one of the preceding claims, **characterized in that** the device is provided with a sensor member (16, 17, 18) for detecting the amount of material flowing per unit of time through the discharge opening (4, 5), and for issuing, in dependence of a detected flow of material per unit of time, a control signal for the drive of the agitator member (11, 12).

11. A device as claimed in any one of the preceding claims, **characterized in that** the device is provided with a sensor member (20) for detecting the decrease in weight per unit of time of the hopper (1) with material, and for issuing, in dependence of a detected decrease in weight per unit of time, a control signal for the drive of the agitator member (11, 12).

12. A device as claimed in any one of the preceding claims, **characterized in that** the device is provided with a sensor member (21) for detecting the level of the material in the hopper (1), and for issuing, in dependence of a detected level, a control signal for the drive of the agitator member (11, 12).

13. A device as claimed in any one of the preceding claims, **characterized in that** the device is provided with a sensor member (22) for detecting the decrease of the level per unit of time of the material in the hopper (1), and for issuing, in dependence of a detected decrease of the level per unit of time, a control signal for the drive of the agitator member (11, 12).

14. A device as claimed in any one of the preceding claims, **characterized in that** the hopper (1) is provided with at least two discharge spouts (2, 3), each discharge spout (2, 3) comprising at least one discharge opening (4, 5), and **in that** in each discharge spout (2, 3) there is provided an agitator member (11, 12) for influencing the conveyance of the material to be spread through a respective discharge opening (4, 5), said agitator members (11, 12) in the various discharge spouts (2, 3) being drivable independently of each other.

15. A device as claimed in any one of the preceding claims, **characterized in that** an agitator member (11, 12) is drivable by means of an electric motor.

16. A device as claimed in any one of the preceding claims, **characterized in that** an agitator member (11, 12) is adapted to carry out a reciprocating movement above a discharge opening (4, 5).

17. A device as claimed in any one of the preceding claims, **characterized in that** an agitator member (11, 12) is adapted to carry out a reciprocating swivelling movement above a discharge opening (4, 5).

18. A device as claimed in claim 16 or 17, **characterized in that** the stroke of the reciprocating movement or that of the swivelling movement is electronically adjustable.

19. A device as claimed in any one of the preceding claims, **characterized in that** an agitator member (11, 12) is adapted to carry out a rotating movement above a discharge opening (4, 5).

20. A device as claimed in claim 19, **characterized in that** an agitator member (11, 12) is constituted by a rotatable bottom or a rotatable bottom portion.

21. A device as claimed in any one of the preceding claims, **characterized in that** the drive speed of the agitator member (11, 12) is electronically adjustable.

22. A device as claimed in any one of claims 7, 8, 10, 11 or 12, **characterized in that** a control signal brings about an activation of the agitator member during a previously adjustable first period of time.

23. A device as claimed in claim 22, **characterized in that** there is provided a checking means, comprising a computer or a microprocessor, for checking at least after driving the agitator member during the first period of time whether the device functions according to parameters set.

24. A device as claimed in claim 23, **characterized in that** the checking means is suitable for issuing a control signal bringing about an activation of the agitator member during a previously adjustable second period of time, and for checking after driving the agitator member during the second period of time whether the device functions according to parameters set.

25. A device as claimed in claim 23 or 24, **characterized in that** the checking means is suitable for issuing an alarm signal when after driving the agitator member during the first and/or second period of time the device does not function according to parameters set.

26. A device as claimed in claim 25, **characterized in that** the alarm signal is a signal that is perceptible to the driver.

27. A device as claimed in claim 25 or 26, **characterized in that** the alarm signal stops the drive of relevant drivable members.

28. A device as claimed in claim 25, 26 or 27, in dependence of claim 6, **characterized in that** the alarm signal stops the drive of the vehicle.

29. A device as claimed in any one of the preceding claims 23 through 28, **characterized in that** the checking means is loaded with a computer programme for giving priority to control signals issued by a particular sensor member for controlling the agitator member.

30. A device as claimed in any one of the preceding claims 23 through 29, **characterized in that** the checking means is loaded with a computer programme for applying a decision criterion to control signals issued by sensor members for controlling the agitator member.
